Europäisches Patentamt

(19) European Patent Office

Office européen des brevets

(11) Veröffentlichungsnummer: **0 123 651**
**B1**

(12) **EUROPÄISCHE PATENTSCHRIFT**

(45) Veröffentlichungstag der Patentschrift:
13.09.89

(51) Int. Cl.⁴: **B 61 D 17/02, B 61 D 1/00,**
**B 62 D 29/00, B 62 D 31/02**

(21) Anmeldenummer: 84810151.5

(22) Anmeldetag: 28.03.84

(54) Wagenkasten, insbesondere für Schienenfahrzeuge.

(30) Priorität: 19.04.83 CH 2088/83

(43) Veröffentlichungstag der Anmeldung:
31.10.84 Patentblatt 84/44

(45) Bekanntmachung des Hinweises auf die Patenterteilung:
13.09.89 Patentblatt 89/37

(84) Benannte Vertragsstaaten:
AT BE CH DE FR GB IT LI NL SE

(56) Entgegenhaltungen:
DE-B-1 094 287
DE-B-1 206 939
DE-C-759 475
FR-A-1 603 258
LU-A-50 477

(73) Patentinhaber: SCHWEIZERISCHE ALUMINIUM
AG, CH- 3965 Chippis (CH)

(72) Erfinder: Zehnder, Jürg, Husacherstrasse 2, CH-
8142 Uitikon (CH)

## Beschreibung

Die Erfindung betrifft einen Wagenkasten, insbesondere für Schienenfahrzeuge, mit eine Dachhaut und einen Boden verbindenden Seitenwände aus Leichtmetallhohlprofilen, insbesonder Aluminiumhohlprofilen.

In dem Bestreben, Transportfahrzeuge, insbesondere Schienenfahrzeuge, von geringerem Gewicht herzustellen und damit die Möglichkeit zusätzlicher Lastaufnahme zu verbessern, werden heute Wagenkästen vermehrt aus Leichtmetall hergestellt. Dabei tauchen jedoch sehr häufig Probleme betreffend die Übertragung der auf den Wagenkasten beim Gebrauch einwirkenden Zug- und Druckkräfte auf. Diese wirken im Wesentlichen in Transportrichtung d.h. in Richtung der Längsachse des Wagenkastens. Zur Aufnahme dieser Kräfte dienen unter anderem Längsträger, welche direkt mit Zugkupplungsorganen in Verbindung stehen. Des weiteren werden insbesondere die Seitenwände aus längsliegenden Vollprofilen hergestellt, welche über die gesamte Wagenlänge verlaufen. Hierdurch wird zwar eine ausreichende Steifigkeit des Wagenkastens gegenüber den obengenannten Kräften erzeugt, jedoch sind zur Erhaltung der Formstabilität zusätzliche Spanten notwendig.

Der Erfinder hat sich zum Ziel gesetzt, einen Aufbau eines Wagenkastens zu schaffen, welcher nicht nur die Übertragung der Längskräfte verbessert, sondern im Zuge dieser Verbesserung auch eine erhöhte Lastaufnahme ermöglicht.

Zur Lösung dieser Aufgabe führt, dass der Boden in versetzt angeordnete Bodenteile aufgegliedert ist, wobei das erste Bodenteil über Seiten von jeweils auf einer Ecke stehenden dreiecksförmigen Wangen mit dem zweiten Bodenteil verbunden ist, während zwischen den Ecken gegenüberliegende Eckpunkte der Wangen ein diese Eckpunkte verbindender Zwischenboden eingeschoben ist, welcher den Wagenkasten in zwei Stockwerke aufteilt.

Wirken nun auf den einen stirnseitig angeordneten Bodenteil Längskräfte ein, werden diese über die Wangen sowohl auf den tieferliegenden Bodenteil als auch auf den Zwischenboden gleichmäßig verteilt, wobei sie dann andernends wiederum über Wangen auf einen Bodenteil zusammengeführt werden. Dementsprechend erfolgt die Kräfteübertragung nur innerhalb der einzelnen Bodenteile bzw. Zwischenböden. Die Seitenwände brauchen keine Längskräfte mehr aufzunehmen.

Erfindungsgemäß sind deshalb die Seitenwände aus senkrecht zur Wagenkastenlängsachse angeordneten Hohlprofilen hergestellt. Diese senkrecht stehenden Hohlprofile können wesentlich leichter und durch vorherige Bearbeitung auch exakter angefertigt werden. Abgesehen davon stellt auch der Zusammenbau der Hohlprofile zu einer Seitenwand kein Problem mehr dar. Auch die Anordnung von Öffnungen, beispielsweise zur Aufnahme von Tür- bzw. Fenstervorrichtungen, ist wesentlich erleichtert und im Vorstadium des Zusammenbaus kostengünstiger.

Zur Verbesserung der Kraftaufnahme sollen sowohl die Bodenteile wie auch im einzelnen Fall die Zwischenböden durch fachwerkartige Querprofile verstärkt sein.

Der Einschub eines Zwischenbodens hat zudem den erheblichen Vorteil, dass nunmehr der Wagenkasten zweistöckig ausgebildet und so eine vermehrte Lastaufnahme möglich ist.

Zur Übertragung der auf die einen Bodenteile einwirkenden Längskräfte genügt an sich die Anordnung von zumindest zwei mit dem anderen Bodenteil bzw. dem Zwischenboden verbundenen Wangen. Bevorzugt sollen aber bis zu 4 Wangen angeordnet sein, da so die symmetrische Kräfteübertragung gesteuert werden kann. Zwischen den einzelnen Wangen befinden sich Treppen zu den einzelnen Stockwerken, wobei beispielsweise unterhalb der zu dem oberen Stockwerk föhrenden Treppen Toilletten- oder dergleichen Einrichtungen eingebaut werden können.

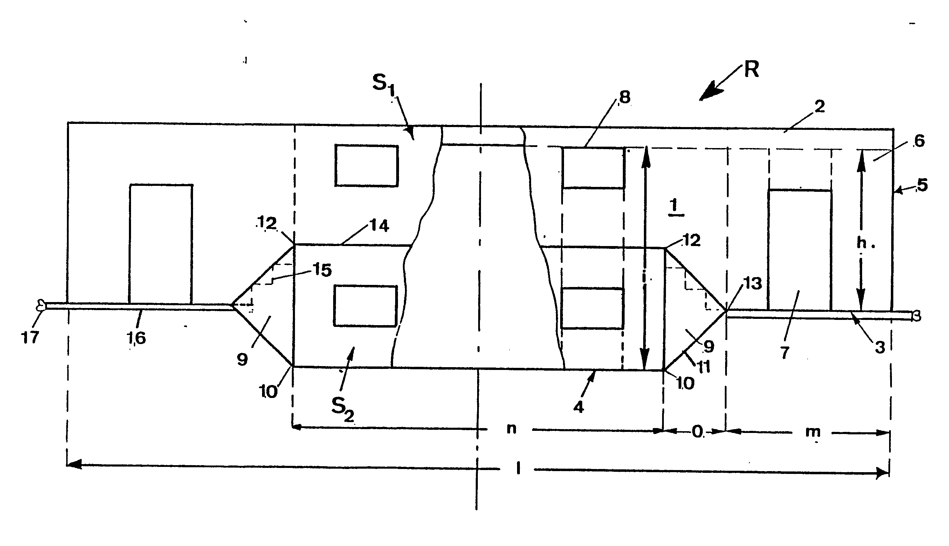

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur einen teilweise geschnittenen, schematisch dargestellten Wagenkasten R, beispielsweise eines S-Bahnwagens.

Der Wagenkasten R weist Seitenwände 1 auf, welche eine Dachhaut 2 mit Bodenteilen 3 und 4 verbinden. Dabei bestehen die Seitenwände 1 zur Stirnseiten 5 des Wagenkastens R hin aus senkrecht stehenden Hohlprofilen 6 (gestrichelt angedeutet), welche jeweils vorbestimmte Öffnungen 7 und 8 zur Aufnahme von Türen, Fenster oder dgl. aufweisen.

Die Hohlprofile 6 haben zur Stirnseite 5 hin eine Höhe h, welche kleiner ist als die Höhe i der wagenmittigen Hohlprofile. Hierdurch ist das Bodenteil 3 gegenüber dem Bodenteil 4 um das Mass der Differenz zwischen h und i versetzt angeordnet, und es ergibt sich ein Wagenaufbau ähnlich einem Eisenbahnwagen mit Bodenwanne.

Die Gesamtwagenlänge 1 des Wagenkastens R bestimmt sich aus zweimal der Länge m des Bodenteils 3 zuzüglich der Länge n des Bodenteils 4 und zweimal der Höhe o einer auf einer Ecke 10 stehenden dreiecksförmigen Wange 9, welche mit einer Seite 11 ausgehend von einem Eckpunkt 13 den Boden 3 mit dem Boden 4 verbindet. Zwischen den jeweils den Ecken 10 gegenüberliegenden Eckpunkten 12 der Wangen 9 ist ein Zwischenboden 14 eingezogen, welcher den Wagenkasten R in zwei Stockwerke $S_1$ und $S_2$ unterteilt.

Von den erfindungsgemässen Wangen 9 sind zumindest zwei, bevorzugt jedoch drei bis vier den Bodenteil 3 mit dem Bodenteil 4 verbindend angeordnet, wobei sich jeweils zwischen den einzelnen Wangen 9 Treppen 15 (gestrichelt angedeutet) zu den einzelnen Stockwerken $S_1$, $S_2$

befinden. Eine bevorzugte Anordnung würde demnach folgende Reihenfolge ergeben: Seitenwand - Wange - Treppe nach $S_2$ - Wange - Treppe nach $S_1$ - Wange - Treppe nach $S_2$ - Wange - Seitenwand.

Unterhalb des Bodenteils 3 kann gegebenenfalls ein Längsträger 16 mit schematisch angedeuteten Kupplungsorganen 17 festgelegt sein.

Der Wagenkasten ruht auf - nicht dargestellten - Radachsen.

Die Bodenteile 3 und 4 und gegebenenfalls der Zwischenboden 14 sind bevorzugt mit der Übersichtlichkeit halber nicht dargestellten Querrippen fachwerkartig verstärkt.

## Patentansprüche

1. Wagenkasten, insbesondere für Schienenfahrzeuge, mit einer Dachhaut (2) und einen Boden (3, 4) verbindenden Seitenwände (1) aus Leichtmetallhohlprofilen (6), insbesondere Aluminiumhohlprofilen,

   dadurch gekennzeichnet,

   dass der Boden in versetzt angeordnete Bodenteile (3 und 4) aufgegliedert ist, wobei das erste Bodenteil (3) über Seiten (11) von jeweils auf einer Ecke (10) stehenden dreiecksförmigen Wangen (9) mit dem zweiten Bodenteil (4) verbunden ist, während zwischen den Ecken (10) gegenüberliegende Eckpunkte (12) der Wangen (9) ein diese Eckpunkte (12) verbindender Zwischenboden (14) eingeschoben ist, welcher den Wagenkasten (R) in zwei Stockwerke ($S_1$, $S_2$) aufteilt.

2. Wagenkasten nach Anspruch 1, dadurch gekennzeichnet, dass zumindest zwei die Bodenteile (3 und 4) verbindende Wangen (9) angeordnet sind.

3. Wagenkasten nach Anspruch 1, dadurch gekennzeichnet, dass vier die Bodenteile (3 und 4) verbindende Wangen (9) angeordnet sind.

4. Wagenkasten nach Anspruch 3, dadurch gekennzeichnet, dass je eine Wange (9) in jede Seitenwand (1) integriert ist.

5. Wagenkasten nach einem der Ansprüche 1 bis 4, dadurch gekennzeichnet, dass zwischen einzelnen Wangen (9) bzw. Wangen (9) und den Seitenwänden (1) Treppen (15) zu den Stockwerken ($S_1$, $S_2$) angeordnet sind.

6. Wagenkasten nach wenigstens einem der Ansprüche 1 bis 5, dadurch gekennzeichnet, dass die Bodenteile (3 und 4) und gegebenenfalls der Zwischenboden (14) mit fachwerkartigen Querrippen verstärkt ist.

7. Wagenkasten nach wenigstens einem der Ansprüche 1 bis 6, dadurch gekennzeichnet, dass die Seitenwände (1) aus senkrecht zur Wagenkastenlängsachse angeordneten Hohlprofilen (6) bestehen, welche unter anderem Öffnungen (7, 8) für Türen, Fenster oder dgl. aufweisen.

## Claims

1. Coach body, especially for rail vehicles, having side walls (1) of lightweight metal hollow sections (6), in particular aluminium hollow sections, connecting a roof skin (2) and a floor (3, 4), characterized in that the floor is divided up into floor parts (3 and 4) in offset arrangement, the first floor part (3) being connected to the second floor part (4) via sides (11) of triangular side plates (9), standing in each case on one corner (10), while between the corner points (12) opposite corners (10) of the side plates (9) there is pushed in an intermediate floor (14) connecting these corner points (12) and dividing the coach body (R) into two levels ($S_1$, $S_2$).

2. Coach body according to Claim 1, characterized in that at least two side plates (9), connecting the floor parts (3 and 4), are arranged.

3. Coach body according to Claim 1, characterized in that four side plates (9), connecting the floor parts (3 and 4) are arranged.

4. Coach body according to Claim 3, characterized in that one side plate (9) each is integrated into each side wall (1).

5. Coach body according to one of Claims 1 to 4, characterized in that between individual side plates (9) or side plates (9) and the side walls (1) there are arranged stairs (15) to the levels ($S_1$, $S_2$).

6. Coach body according to at least one of Claims 1 to 5, characterized in that the floor parts (3 and 4) and, if appropriate, the intermediate floor (14) is (sic) reinforced with lattice-like transverse ribs.

7. Coach body according to at least one of Claims 1 to 6, characterized in that the side walls (1) consist of hollow sections (6) arranged perpendicular to the coach body longitudinal axis and having, inter alia, openings (7, 8) for doors, windows or the like.

## Revendications

1. Caisse de voiture, en particulier pour véhicules ferroviaires, comportant une peau de toit (2) et un plancher (3, 4) qui relient les parois latérales (1) constituées de profilés creux (6) en métal léger, en particulier de profilés creux d'aluminium,

   caractérisée,

   en ce que le plancher se divise en parties de plancher (3 et 4) disposées décalées, étant précisé que la première partie (3) de plancher est reliée à la seconde partie (4) de plancher par l'intermédiaire des côtés (11) de limons triangulaires (9) respectivement situés à un angle (10), tandis qu'entre les sommets (12), situés en face des angles (10), des limons (9) est inséré un plancher intermédiaire (14) qui relie ces sommets (12) et qui divise la caisse de voiture (R) en deux étages ($S_1$, $S_2$).

2. Caisse de voiture selon la revendication 1, caractérisée en ce qu'il y a au moins deux limons (9) reliant les parties (3 et 4) du plancher.

3. Caisse de voiture selon la revendication 1, caractérisée en ce qu'il y a quatre limons (9) reliant les parties (3 et 4) du plancher.

4. Caisse de voiture selon la revendication 3, caractérisée en ce qu'un limon (9) est chaque fois incorporé dans chaque paroi latérale (1).

5. Caisse de voiture selon l'une des revendications 1 à 4, caractérisée en ce qu'entre les différents limons (9), ou bien entre les limons (9) et les parois latérales (1), sont disposés des escaliers (15) d'accès aux étages ($S_1$, $S_2$).

6. Caisse de voiture selon au moins l'une des revendications 1 à 5, caractérisée en ce que les parties (3 et 4) du plancher et éventuellement le plancher intermédiaire (14) sont renforcés avec des nervures transversales du type treillis.

7. Caisse de voiture selon au moins l'une des revendications 1 à 6, caractérisée en ce que les parois latérales (1) sont constituées de profilés creux (6) qui sont disposés perpendiculairement par rapport à l'axe longitudinal de la caisse de voiture et qui présentent, entre autres, des ouvertures (7, 8) pour les portes, les fenêtres ou analogues.

EP 0 123 651 B1